(19) Europäisches Patentamt / European Patent Office / Office européen des brevets

(11) **EP 3 847 011 B1**

(12) **EUROPEAN PATENT SPECIFICATION**

(45) Date of publication and mention
of the grant of the patent:
**23.07.2025  Bulletin 2025/30**

(21) Application number: **20870474.2**

(22) Date of filing: **07.10.2020**

(51) International Patent Classification (IPC):
**B32B 1/08** *(2006.01)*    **B32B 27/08** *(2006.01)*
**B32B 27/32** *(2006.01)*    **B32B 7/12** *(2006.01)*
**B32B 27/20** *(2006.01)*    **B32B 27/30** *(2006.01)*
**B32B 27/18** *(2006.01)*

(52) Cooperative Patent Classification (CPC):
**B32B 7/12; B32B 1/08; B32B 27/08; B32B 27/18;**
**B32B 27/20; B32B 27/306; B32B 27/32;**
B32B 2250/05; B32B 2250/24; B32B 2250/242;
B32B 2250/246; B32B 2264/10; B32B 2264/102;
B32B 2264/104; B32B 2270/00;          (Cont.)

(86) International application number:
**PCT/IN2020/050863**

(87) International publication number:
**WO 2021/070198 (15.04.2021 Gazette 2021/15)**

(54) **A LAMITUBE AND IMPLEMENTATIONS THEREOF**

LAMITUBE UND IMPLEMENTIERUNGEN DAVON

TUBE STRATIFIÉ MULTICOUCHE ET SES MISES EN OEUVRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **07.10.2019  IN 201921040615**

(43) Date of publication of application:
**14.07.2021  Bulletin 2021/28**

(60) Divisional application:
**25177685.2 / 4 582 253**

(73) Proprietor: **EPL Limited**
**Mumbai 400013 (IN)**

(72) Inventor: **NAIR, Hariharan Krishnan**
**Mumbai 400067 (IN)**

(74) Representative: **Regimbeau**
**20, rue de Chazelles**
**75847 Paris Cedex 17 (FR)**

(56) References cited:
**WO-A1-2008/135755      WO-A1-2018/202479**
**WO-A1-2018/202479      WO-A1-2019/172932**
**WO-A1-2019/172932      US-A1- 2017 080 669**
**US-A1- 2019 299 574**

(52) Cooperative Patent Classification (CPC): (Cont.)
B32B 2307/31; B32B 2307/4026; B32B 2307/50;
B32B 2307/54; B32B 2307/72; B32B 2307/7242;
B32B 2307/732; B32B 2439/70; B32B 2597/00

# EP 3 847 011 B1

## Description

### FIELD OF THE INVENTION

The present disclosure generally relates to the field of plastics, and in particular to lamitubes.

### BACKGROUND OF THE INVENTION

The relative ease of manufacture of plastics, coupled with its wide functionality has made plastics a widely accepted material. Indeed, plastics have penetrated all industries as the preferred packaging material. However, the last decade has seen growing concerns surrounding the accumulation of non-biodegradable material, including plastics, and therefore a large amount of research has been focussed on recycling techniques for making plastic-use more sustainable.

WO2013057737 reveals process for recycling plastic waste comprising segregation of cleaned waste, grinding and vent extrusion to obtain molten plastic which can be re-used. Typically, plastic may only be recycled with other plastics having similar chemical and physical properties, such as backbone structure, and density. Therefore, non-cumbersome segregation of plastic waste is of high importance, especially in the scenario of day-to-day usage of large and variety of plastics.

Further, laminated plastic material is noted to allow enhancement of properties, for instance a multi-layer material may allow inclusion of aesthetic layer along with chemico-mechanical stability. In this regard, plastic laminated tubes or lamitubes are noted to have a wide market-reach with applications including cosmetic and nutraceuticals packaging.

WO2013051007 reveals laminated tube comprising high density polyethylene (HDPE), ethylene vinyl alcohol (EVOH) and at least one compatibilizer. Said tubes are noted to have 50-60% HDPE.

A tube largely made up of HDPE, has advantages of high mechanical strength. Also, such tubes can be readily recycled as part of the HDPE stream, thus making them highly favourable. However, on the flip side, such tubes are noted to possess the problems with ovality, i.e., such tubes are noted to be too stiff (due to high HDPE content) to process into a perfectly circular shape.

Although, considerable efforts have been made to overcome this problem, the present state of the art still requires a plastic packaging material that, in addition to being mechanically strong is also flexible and can be easily molded in the desired shape.

WO2019/172932 discloses a recyclable package including an outer layer consisting essentially of a first high-density polyethylene (HDPE), an inner layer including a second HDPE, a barrier layer positioned between the outer layer and the inner layer. The outer layer and the inner layer do not include a low-density polyethylene (LDPE), a linear low-density polyethylene (LLDPE), a medium-density polyethylene (MDPE), or a polypropylene (PP).

WO2018/202479 discloses a packaging laminate having a first laminate layer and a second laminate layer, wherein the first laminate layer is a co-extruded composite, elongated in the machine direction, consisting of a substrate layer having a high HDPE component of at least 60 % by volume, a connecting layer and a barrier layer consisting of a barrier polymer, preferably polyamide or ethylene vinyl alcohol copolymer.

JP2004249474A discloses a fuel container comprising a laminate having at least one layer comprising an ethylene/vinyl alcohol copolymer (A) and layers comprising a thermoplastic resin (B) arranged on both sides of the layer comprising the ethylene/vinyl alcohol copolymer (A).

WO2006/133692 discloses the production and use of a laminate for tube and container structures, whereby the containers are defined with a rotationally symmetric limit dimensioning by the smallest commercial diameter D = 10 mm, the smallest shoulder radius R = 3 mm and by the largest possible shoulder angle of $\alpha$ = 60°.

US2016/339663 discloses a recyclable food package prepared using a polyethylene structure having a first web and a second web, each web containing at least one layer of High Density Polyethylene (HDPE) to provide stiffness. The outer web also contains a layer of lower density polyethylene for improved optical properties.

US2006/0188678 discloses a multi-layer film and packaging, including heavy duty sacks made therefrom, including a mLLDPE-containing skin layer and a core layer that includes both HDPE and mLLDPE.

US3931449 discloses a resin laminate structure comprising a layer of a polymer selected from the group consisting of polyolefins and saponified products of ethylene-vinyl acetate copolymers and a layer of a blend comprising (A) a polyolefin and (B) a saponified product of an ethylene-vinyl acetate copolymer, at an A:B mixing weight ratio ranging from 98:2 to 2:98.

WO2018/042299 discloses a recyclable package such as a Stand Up Pouch (SUP) which is prepared using a coextruded polyethylene structure having a first surface layer, a first intermediate layer, a second intermediate layer, and a second surface layer which is a sealable layer. The coextruded structure contains two layers of High Density Polyethylene (HDPE) to provide stiffness.

WO2008/135755 discloses collapsible tube containers formed from blown film polymeric material or blown film milti-layer polymeric material, and in particular a nine-layer polymeric material comprising layers of HDPE, MDPE, LDPE and a layer of EVOH.

US2019/299574 discloses a multilayer structure comprising a first polyethylene layer as a first external layer, a second polyethylene layer as a second external layer and further a layer made of a copolymer of EVOH between the first external layer and the second external layer and a tie layer on each side of the EVOH layer. Furthermore, the tie layers comprise one or more copolymers of ethylene.

## SUMMARY OF THE INVENTION

In an aspect of the present disclosure, there is provided a lamitube as claimed in claim 1.

In another aspect of the present disclosure, there is a provided a process as claimed in claim 9, for manufacturing the lamitube of the invention.

These and other features, aspects, and advantages of the present subject matter will be better understood with reference to the following description and appended claims. This summary is provided to introduce a selection of concepts in a simplified form.

## DETAILED DESCRIPTION OF THE INVENTION

*Definitions:*

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only".

The term "including" is used to mean "including but not limited to", "including" and "including but not limited to" are used interchangeably.

Unless defined otherwise, all technical and scientific terms used herein have the same meaning as commonly understood to one of ordinary skill in the art to which this disclosure belongs. Although methods and materials similar or equivalent to those described herein can be used in the practice or testing of the disclosure, the preferred methods, and materials are now described.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a thickness range of about 50 $\mu$m - about 150 $\mu$m should be interpreted to include not only the explicitly recited limits of about 50 $\mu$m - about 150 $\mu$m, but also to include sub-ranges, such as 52 $\mu$m - 150 $\mu$m, 50 $\mu$m - 148 $\mu$m, and so forth, as well as individual amounts, including fractional amounts, within the specified ranges, such as 50.5 $\mu$m, 52.1 $\mu$m, and 129.9 $\mu$m, for example.

The term "ovality" used herein refers to the percentage deviation of the lamitubes from conforming to perfectly circular shape.

The term "lamitube" used herein refers to laminated tubes comprising: a) a top layer comprising at least one ethylene polymer; and b) a second layer comprising at least one ethylene polymer having a first surface and a second surface, wherein the lamitube has a density in the range of 0.942 - 0.99 gm/cm$^3$.

The term "favourable" used herein refers to the lamitubes of the present disclosure being readily recyclable as part of the high density polyethylene (HDPE) code #2 stream with simple methods of segregation or sorting.

The term "heat sealable blocking layer" used herein refers to a barrier layer which can also be used as sealant layer. The examples include, but are not limited to, EVOH barrier layer.

The phrase "at least one ethylene polymer" used herein refers to a combination of high density polyethylene (HDPE) and medium density polyethylene (MDPE). It may also include a polyethylene master batch (MB).

The term "stiffness" used herein refers to the resistance of a material to deformation under an applied force.

The term "young's modulus" used herein refers to the property of a material that is calculated by measuring the ratio of stress to strain incurred in the material. Young's modulus gives a measure of the stiffness of the material or the ease with which it can be stretched or bent. Higher the value of the young's modulus, lesser is the extent to which a material can be stretched or elongated, higher is the stiffness. It is measured in terms of N/m$^2$ or Pascal (Pa).

The term "melt flow index" or "MFI" used refers to the grams of polymer flowing per 10 minutes through a capillary tube. It is a measure of the ease of flowing of the polymer melt denoted in terms of g/10 min.

The term "density" used herein refers to the mass of polymer present per unit volume of the lamitube. It is measured in terms of $g/cm^3$.

As mentioned in the background section, there is a need for tubes that can overcome the problem associated with ovality. Multi-layer laminated tubes involving a mixture of low-density plastics can provide a possible solution, however, in such cases the compatibility with HDPE recycle streams is noted to drastically reduce. Therefore, there is need for lamitubes that offer both low ovality and are environmentally friendly to use. The present disclosure provides a lamitube as claimed in claim 1. The present lamitube, having density on the higher side, allows easy recyclability in the HDPE recycling stream. Moreover, despite the high density, the lamitube shows surprisingly low ovality in the range of 1 - 8%. Hence, in view of the above-mentioned superior properties, the lamitube of the present disclosure would open new opportunities in the realm of currently used packaging materials. The invention concerns a lamitube comprising: (a) a top layer comprising a resin composition comprising a combination of high-density polyethylene (HDPE) and medium density polyethylene (MDPE) having a melt flow index in the range of 0.5 - 1.2 g/10 minutes and a density in the range of 0.942 - 0.990 $gm/cm^3$; (b) a second layer comprising a combination of high-density polyethylene (HDPE) and medium density polyethylene (MDPE), having a first surface and a second surface, whereby the meaning of the first and second surface of the second layer is given herein, wherein the second layer is a heat sealable blocking layer comprising 3-11 layers and having a thickness in the range of 50 $\mu$m - 150 $\mu$m, comprising EVOH having a weight percentage in the range of 1 - 10% with respect to the lamitube; wherein the heat sealable blocking layer comprises a core layer, an outer layer, an inner layer, and at least one third adhesive layer; (c) at least one first adhesive layer present between the top layer and the first surface of second layer; (d) a third layer, wherein the third layer is a sealant layer comprising a resin composition comprising a combination of high-density polyethylene (HDPE) and medium density polyethylene (MDPE) having a melt flow index in the range of 0.5 - 1.2 g/10 minutes and a density in the range of 0.942 - 0.990 $gm/cm^3$; and (e) at least one second adhesive layer present between the third layer and the second surface of the second layer; wherein the lamitube has a density in the range of 0.942 - 0.990 $gm/cm^3$, and has a tube ovality in the range of 1-8% measured using prefrabricated gauge method,and a thickness in the range of 170-400 $\mu$m.

In an embodiment of the present disclosure, the lamitube has a density in the range of 0.945 - 0.975 $gm/cm^3$. In another embodiment of the present disclosure, the lamitube has a density in the range of 0.950 - 0.970 $gm/cm^3$.

In an embodiment of the present disclosure, there is provided a lamitube as described herein, wherein the lamitube has a tube ovality in the range of 1.5 - 7.5%. In another embodiment of the present disclosure, the lamitube has a tube ovality in the range of 2.0 - 6.0%.

In an embodiment of the present disclosure, there is provided a lamitube as described herein, wherein the top layer comprises 1-3 layers and has a thickness in the range of 50 $\mu$m - 150 $\mu$m. In one another embodiment of the present disclosure, the top layer comprises 2-3 layers. In yet another embodiment of the present disclosure, the top layer has a thickness in the range of 100 $\mu$m - 150 $\mu$m. In one another embodiment of the present disclosure, the top layer has a thickness in the range of 90 $\mu$m - 130 $\mu$m. In yet another embodiment of the present disclosure, the top layer has a thickness in the range of 100 $\mu$m - 115 $\mu$m.

In an embodiment of the present disclosure there is provided a lamitube as described herein, wherein the lamitube has a density in the range of 0.942 - 0.99 $gm/cm^3$ and the top layer comprises 1-3 layers and has a thickness in the range of 50 $\mu$m - 150 $\mu$m.

In an embodiment of the present disclosure there is provided a lamitube as described herein, wherein the top layer comprises 1-3 layers and has a thickness in the range of 50 $\mu$m - 150 $\mu$m.

In an embodiment of the present disclosure, there is provided a lamitube as described herein, wherein the second layer comprises 3 - 7 layers.

In an embodiment of the present disclosure, the heat sealable blocking layer comprises 3-10 layers. In yet another embodiment of the present disclosure, the heat sealable blocking layer comprises 3-7 layers. In one another embodiment of the present disclosure, the heat sealable blocking layer has a thickness in the range of 55 $\mu$m -150 $\mu$m. In yet another embodiment of the present disclosure, the heat sealable blocking layer has a thickness in the range of 65 $\mu$m -150 $\mu$m.

In an embodiment of the present disclosure, there is provided a lamitube as described herein, wherein the heat sealable blocking layer comprises EVOH having a weight percentage in the range of 2-9% with respect to the lamitube. In yet another embodiment of the present disclosure, the heat sealable blocking layer comprises EVOH having a weight percentage in the range of 3.5-7.5% with respect to the lamitube. In one another embodiment of the present disclosure, the heat sealable blocking layer comprises EVOH having a weight percentage of 5% with respect to the lamitube.

In an embodiment of the present disclosure, there is provided a lamitube as described herein, wherein the sealant layer comprises 1-3 layers and has a thickness in the range of 50 $\mu$m - 180 $\mu$m. In one another embodiment of the present disclosure, the sealant layer comprises 1-3 layers and has a thickness in the range of 55 $\mu$m - 150 $\mu$m. In yet another embodiment of the present disclosure, the sealant layer comprises 1-3 layers and has a thickness in the range of 65 $\mu$m - 150 $\mu$m.

In an embodiment of the present disclosure, there is provided a lamitube as described herein, wherein the core layer, the outer layer, the inner layer, and the at least one third adhesive layer independently is a single or multilayer structure.

In an embodiment of the present disclosure, there is provided a lamitube as described herein, wherein the at least one first adhesive layer, the at least one second adhesive layer, and the at least one third adhesive layer independently has a thickness in the range of 20 $\mu$m - 40 $\mu$m. In one another embodiment of the present disclosure, the at least one first adhesive layer, the at least one second adhesive layer, and the at least one third adhesive layer independently has a thickness in the range of 20 $\mu$m - 25 $\mu$m. In yet another embodiment of the present disclosure, the at least one first adhesive layer, the at least one second adhesive layer, and the at least one third adhesive layer independently has a thickness in the range of 28 $\mu$m - 32 $\mu$m.

In an embodiment of the present disclosure, there is provided a lamitube as described herein, wherein the at least one first adhesive layer, the at least one second adhesive layer, and the at least one third adhesive layer comprises ethylene polymer having a density in the range of 0.930 - 0.962 gm/cm$^3$. In one another embodiment of the present disclosure, the at least one first adhesive layer and the at least one second adhesive layer comprises ethylene polymer having a density in the range of 0.932 - 0.960 gm/cm$^3$. In yet another embodiment of the present disclosure, the at least one first adhesive layer and the at least one second adhesive layer comprises ethylene polymer having a density in the range of 0.936 - 0.955 gm/cm$^3$.

In an embodiment of the present disclosure the at least one first adhesive layer, the at least one second adhesive layer, and the at least one third adhesive layer independently has a thickness in the range of 20 $\mu$m - 40 $\mu$m and the at least one first adhesive layer and the at least one second adhesive layer comprises ethylene polymer having a density in the range of 0.930 - 0.962 gm/cm$^3$.

In an embodiment of the present disclosure there is provided a as described herein, wherein the lamitube has a density in the range of 0.942 - 0.99 gm/cm$^3$ and the lamitube further comprises a third layer, wherein the third layer is a sealant layer and the at least one first adhesive layer, the at least one second adhesive layer, and the at least one third adhesive layer independently has a thickness in the range of 20 $\mu$m - 40 $\mu$m and the at least one first adhesive layer and the at least one second adhesive layer comprises ethylene polymer having a density in the range of 0.930 - 0.962 gm/cm$^3$.

In an embodiment of the present disclosure, there is provided a lamitube as described herein, wherein the top layer and the sealant layer independently has a resin composition comprising: a combination of high-density polyethylene (HDPE) and medium density polyethylene (MDPE)having a melt flow index in the range of 0.6 - 1.1 g/10 minutes. In yet another embodiment of the present disclosure, the top layer and the sealant layer independently has a resin composition comprising: a combination of high-density polyethylene (HDPE) and medium density polyethylene (MDPE) having a melt flow index in the range of 0.7 - 1.0 g/10 minutes. In one another embodiment of the present disclosure, the top layer and the sealant layer independently has a resin composition comprising: a combination of high-density polyethylene (HDPE) and medium density polyethylene (MDPE)having a density in the range of 0.945 - 0.978 gm/cm$^3$. In yet another embodiment of the present disclosure, the top layer and the sealant layer independently has a resin composition comprising: a combination of high-density polyethylene (HDPE) and medium density polyethylene (MDPE)having a density in the range of 0.948 - 0.975 gm/cm$^3$. In one another embodiment of the present disclosure, the top layer and the sealant layer independently has a resin composition comprising: a combination of high-density polyethylene (HDPE) and medium density polyethylene (MDPE)having a melt flow index in the range of 0.6 - 1.1 g/10 minutes and a density in the range of 0.945 - 0.978 gm/cm$^3$.

In an embodiment of the present disclosure, there is provided a lamitube as described herein, wherein the resin composition comprises a colorant master batch having a weight percentage in the range of 0 - 10% with respect to the resin composition. In one another embodiment of the present disclosure, the resin composition comprises a colorant master batch having a weight percentage in the range of 2 - 8% with respect to the resin composition. In yet another embodiment of the present disclosure, the resin composition comprises a colorant master batch having a weight percentage in the range of 3 - 7% with respect to the resin composition. In one another embodiment of the present disclosure, the resin composition does not comprise the colorant master batch.

In an embodiment of the present disclosure, there is provided a lamitube as described herein, wherein the colorant master batch comprises at least one pigment selected from the group consisting of titanium dioxide (TiO$_2$), zinc sulphide (ZnS$_2$), zinc oxide (ZnO), barium sulfate (BaSO$_4$), and calcium carbonate (CaCO$_3$). In another embodiment of the present disclosure, a white colorant master batch is made from titanium dioxide (TiO$_2$).

In an embodiment of the present disclosure, there is provided a lamitube as described herein, wherein the lamitube has a stiffness in the range of 200 - 1300 mg. In one another embodiment of the present disclosure, the lamitube has a stiffness in the range of 240 - 960 mg. In yet another embodiment of the present disclosure, the lamitube has a stiffness in the range of 250 - 955 mg. The stiffness of the lamitube may be tested by TAPPI T556 standard method.

In an embodiment of the present disclosure, there is provided a lamitube as described herein, wherein the lamitube has a young's modulus in the range of 600 - 1000 MPa. In one another embodiment of the present disclosure, the lamitube has a young's modulus in the range of 650 - 900 MPa. In yet another embodiment of the present disclosure, the lamitube has a young's modulus in the range of 665 - 860 MPa. The young's modulus may be tested by ASTM D882 method.

In an embodiment of the present disclosure there is provided a lamitube as described herein, wherein the lamitube has a density in the range of 0.942 - 0.99 gm/cm$^3$ and the lamitube has a stiffness in the range of 200 - 1000 mg and the lamitube has a young's modulus in the range of 600 - 1000 MPa.

In an embodiment of the present disclosure, there is provided a lamitube as described herein, wherein lamitube is sustainable.

In an embodiment of the present disclosure, there is provided a lamitube as described herein, wherein the lamitube has a thickness in the range of 190 $\mu$m - 395 $\mu$m. In yet another embodiment of the present disclosure, the lamitube has a thickness in the range of 210 $\mu$m - 350 $\mu$m.

In an embodiment of the present disclosure, there is provided a process for manufacturing the lamitube as described herein, said process comprises the steps of forming the layers and laminating the layers together, then slitting into reels of desired width in the range of 63 - 320 mm, followed by tubing from the reels. In one another embodiment of the present disclosure, the desired width is in the range of 80 - 200 mm. In yet another embodiment of the present disclosure, the desired width is in the range of 100 - 130 mm.

In an embodiment of the present disclosure, there is provided a lamitube comprising: a) a top layer comprising 3 layers having a total thickness in the range of 50 - 150 $\mu$m comprising the combination of high-density polyethylene (HDPE) and medium density polyethylene (MDPE); b) a second layer comprising a combination of high-density polyethylene (HDPE) and medium density polyethylene (MDPE and comprising 3-11 layers having a thickness in the range of 50 $\mu$m - 150 $\mu$m, wherein the second layer is a heat sealable blocking layer comprising EVOH in the weight percentage range of 1 - 10% with respect to the lamitube; c) a first adhesive layer present between the top layer and the first surface of the second layer comprising the at least one ethylene polymer having a total thickness in the range of 20 - 40 $\mu$m; d) a third layer comprising 3 layers having a thickness in the range of 50 - 150 $\mu$m, wherein the third layer is a sealant layer comprising a combination of high-density polyethylene (HDPE) and medium density polyethylene (MDPE; and e) a second adhesive layer present between the third layer and the second surface of the second layer comprising the at least one ethylene polymer having a total thickness in the range of 20 - 40 $\mu$m, wherein the lamitube has a density in the range of 0.942 - 0.99 gm/cm$^3$.

In an embodiment of the present disclosure, there is provided a lamitube comprising: a) a top layer comprising 3 layers having a total thickness in the range of 50 - 150 $\mu$m comprising: (1) layer 1 comprising a combination of HDPE and MDPE; (2) layer 2 comprising a combination of HDPE, MDPE and optionally a colorant master batch; and (3) layer 3 comprising a combination of HDPE, MDPE and optionally a colorant master batch; b) a second layer comprising 7 layers having a thickness in the range of 50 $\mu$m - 150 $\mu$m, wherein the second layer is a heat sealable blocking layer comprising: (i) a first surface comprising a combination of HDPE, MDPE and optionally a colorant master batch; (ii) layer 4 comprising HDPE or LDPE based third adhesive layer; (iii) layer 5 comprising EVOH or third adhesive layer; (iv) layer 6 comprising EVOH; (v) layer 7 comprising EVOH or third adhesive layer; (vi) layer 8 comprising HDPE or LDPE based third adhesive layer; and (vii) a second surface comprising a combination of HDPE, MDPE and optionally a colorant master batch, wherein EVOH is in the weight percentage range of 1 - 10% with respect to the lamitube; c) a first adhesive layer present between the top layer and the first surface of the second layer comprising the at least one ethylene polymer selected from HDPE, LLDPE, LDPE and combinations thereof having a total thickness in the range of 20 - 40 $\mu$m, d) a third layer comprising 3 layers and a thickness in the range of 50 - 150 $\mu$m, wherein the third layer is a sealant layer comprising: (I) layer 1 comprising a combination of HDPE and MDPE; (II) layer 2 comprising a combination of HDPE, MDPE and optionally a colorant master batch; and (III) layer 3 comprising a combination of HDPE and MDPE; and e) a second adhesive layer present between the third layer and the second surface of the second layer comprising the at least one ethylene polymer selected from HDPE, LLDPE, LDPE and combinations thereof having a total thickness in the range of 20 - 40 $\mu$m, wherein the lamitube has a density in the range of 0.942 - 0.99 gm/cm$^3$.

In an embodiment of the present disclosure, there is provided a lamitube as described herein comprising: a) a top layer having a total thickness of 150 $\mu$m comprising 3 layers comprising: (1) layer 1 having a thickness of 30 $\mu$m comprising a combination of HDPE and MDPE; (2) layer 2 having a thickness of 90 $\mu$m comprising a combination of HDPE, MDPE and optionally a colorant master batch; and (3) layer 3 having a thickness of 30 $\mu$m comprising a combination of HDPE, MDPE and optionally a colorant master batch; b) a second layer comprising 7 layers having a thickness in the range of 50 $\mu$m - 150 $\mu$m, wherein the second layer is a heat sealable blocking layer comprising: (i) a first surface comprising a combination of HDPE, MDPE and optionally a colorant master batch; (ii) layer 4 comprising HDPE or LDPE based third adhesive layer; (iii) layer 5 comprising EVOH or third adhesive layer; (iv) layer 6 comprising EVOH; (v) layer 7 comprising EVOH or third adhesive layer; (vi) layer 8 comprising HDPE or LDPE based third adhesive layer; and (vii) a second surface comprising a combination of HDPE, MDPE and optionally a colorant master batch, wherein EVOH is in the weight percentage range of 1 - 10% with respect to the lamitube; and c) a first adhesive layer present between the top layer and the first surface of the second layer having a thickness of 30 $\mu$m comprising a combination of HDPE and LDPE, wherein the lamitube has a density in the range of 0.942 - 0.99 gm/cm$^3$.

In an embodiment of the present disclosure, there is provided a lamitube as described herein having a thickness of 250 $\mu$m comprising: a) a top layer having a total thickness of 110 $\mu$m comprising 3 layers comprising: (1) layer 1 comprising a combination of HDPE and MDPE; (2) layer 2 comprising a combination of HDPE, MDPE and 10 % white colorant master batch; and (3) layer 3 comprising a combination of HDPE and MDPE; b) a second layer comprising 5 layers having a thickness of 50 $\mu$m, wherein the second layer is a heat sealable blocking layer comprising: (i) a first surface comprising a combination of HDPE and MDPE; (ii) third adhesive layer comprising a maleic anhydride grafted LLDPE; (iii) core layer comprising EVOH; (iv) third adhesive layer comprising a maleic anhydride grafted LLDPE; and (v) a second surface comprising a combination of HDPE and MDPE, wherein EVOH is in the weight percentage range of 1 - 10 % with respect to the lamitube; c) a first adhesive layer comprising LDPE present between the top layer and the first surface of the second layer having a thickness of 20 $\mu$m, d) a third layer comprising 3 layers and a thickness of 50 $\mu$m, wherein the third layer is a sealant layer comprising: (I) layer 1 comprising a combination of HDPE and MDPE; (II) layer 2 comprising a combination of HDPE and MDPE; and (III) layer 3 comprising a combination of HDPE and MDPE; and e) a second adhesive layer comprising LDPE present between the third layer and the second surface of the second layer having a thickness of 20 $\mu$m, wherein the lamitube has a density in the range of 0.942 - 0.99 gm/cm$^3$.

In an embodiment of the present disclosure, there is provided a lamitube as described herein having a thickness of 300 $\mu$m comprising: a) a top layer having a total thickness of 140 $\mu$m comprising 3 layers comprising: (1) layer 1 comprising a combination of HDPE and MDPE; (2) layer 2 comprising a combination of HDPE, MDPE and 10 % white colorant master batch; and (3) layer 3 comprising a combination of HDPE and MDPE; b) a second layer comprising 5 layers having a thickness of 50 $\mu$m, wherein the second layer is a heat sealable blocking layer comprising: (i) a first surface comprising a combination of HDPE and MDPE; (ii) third adhesive layer comprising a maleic anhydride grafted LLDPE; (iii) core layer comprising EVOH; (iv) third adhesive layer comprising a maleic anhydride grafted LLDPE; and (v) a second surface comprising a combination of HDPE and MDPE, wherein EVOH is in the weight percentage range of 1 - 10 % with respect to the lamitube; c) a first adhesive layer comprising LDPE present between the top layer and the first surface of the second layer having a thickness of 20 $\mu$m, d) a third layer comprising 3 layers and a thickness of 70 $\mu$m, wherein the third layer is a sealant layer comprising: (I) layer 1 comprising a combination of HDPE and MDPE; (II) layer 2 comprising a combination of HDPE and MDPE; and (III) layer 3 comprising a combination of HDPE and MDPE; and e) a second adhesive layer comprising LDPE present between the third layer and the second surface of the second layer having a thickness of 20 $\mu$m, wherein the lamitube has a density in the range of 0.942 - 0.99 gm/cm$^3$.

In an embodiment of the present disclosure, there is provided a lamitube as described herein having a thickness of 350 $\mu$m comprising: a) a top layer having a total thickness of 150 $\mu$m comprising 3 layers comprising: (1) layer 1 comprising a combination of HDPE and MDPE; (2) layer 2 comprising a combination of HDPE, MDPE and 10 % white colorant master batch; and (3) layer 3 comprising a combination of HDPE and MDPE; b) a second layer comprising 5 layers having a thickness of 50 $\mu$m, wherein the second layer is a heat sealable blocking layer comprising: (i) a first surface comprising a combination of HDPE and MDPE; (ii) third adhesive layer comprising a maleic anhydride grafted LLDPE; (iii) core layer comprising EVOH; (iv) third adhesive layer comprising a maleic anhydride grafted LLDPE; and (v) a second surface comprising a combination of HDPE and MDPE, wherein EVOH is in the weight percentage range of 1 - 10 % with respect to the lamitube; c) a first adhesive layer comprising LDPE present between the top layer and the first surface of the second layer having a thickness of 20 $\mu$m, d) a third layer comprising 3 layers and a thickness of 110 $\mu$m, wherein the third layer is a sealant layer comprising: (I) layer 1 comprising a combination of HDPE and MDPE; (II) layer 2 comprising a combination of HDPE and MDPE; and (III) layer 3 comprising a combination of HDPE and MDPE; and e) a second adhesive layer comprising LDPE present between the third layer and the second surface of the second layer having a thickness of 20 $\mu$m, wherein the lamitube has a density in the range of 0.942 - 0.99 gm/cm$^3$.

Although the subject matter has been described in considerable detail with reference to certain preferred embodiments thereof, other embodiments are possible.

**Abbreviations:**

LDPE: low density polyethylene
LLDPE: linear-low density polyethylene
MDPE: medium density polyethylene
MB: master batch
MD: machine direction;
TD: Transverse direction;
MPa denotes mega-pascal;
$\mu$m denotes microns or micrometre;
mg denotes milligram

EXAMPLES

EXAMPLE 1

**Preparation of lamitube of the present disclosure**

A process of manufacturing the lamitube comprises the steps of forming the layers and laminating the layers together, then slitting into reels of desired width (63 to 320 mm), followed by tubing from the reels. The exemplary lamitubes are illustrated below:

**Structure 1:**

**Top layer (3-layer film); Thickness range: 50 - 150 μm ;**

Layer 1 [HDPE (15% - 85%) + MDPE (85% - 15%)];
Layer 2 [HDPE (15% - 70%) + MDPE (70% - 15%) + 15% optional colorant master batch];
Layer 3 [HDPE (15% - 70%) + MDPE (70% - 15%) + 15% optional colorant master batch];

**First adhesive layer; Thickness range: 20 - 40 μm;**
[HDPE (0% - 50%) + LDPE (100% - 50%)]
**Heat sealable blocking layer; Thickness range: 50 - 150 μm ;**

First surface [HDPE (50% - 70%) + MDPE (50% - 15%) + 15% optional colorant master batch]
Layer 4 [HDPE or LLDPE based third adhesive layer]
Layer 5 [EVOH or third adhesive layer]
Layer 6 [EVOH] (core layer)
Layer 7 [EVOH or third adhesive layer]
Layer 8 [HDPE or LLDPE based third adhesive layer]
Second surface [HDPE (50% - 70%) + MDPE (50% - 15%) + 15% optional colorant master batch]

**Second adhesive layer; Thickness range: 20 - 40 μm;**
[HDPE (0% - 50%) + LDPE (100% - 50%)]
**Sealant layer (3-layer film); Thickness range: 50 - 150 μm ;**

Layer 9 [HDPE (15% - 85%) + MDPE (85% - 15%)]
Layer 10 [HDPE (15% - 70%) + MDPE (70% - 15%) + 15% optional colorant master batch]
Layer 11 [HDPE (15% - 85%) + MDPE (85% - 15%)]

**Structure 2:**

**Top layer (3-layer film); Thickness: 150 μm;**

Layer 1 [HDPE (15% - 85%) + MDPE (85% - 15%)]; 30 μm
Layer 2 [HDPE (15% - 70%) + MDPE (70% - 15%) + 15% optional colorant master batch]; 90 μm
Layer 3 [HDPE (15% - 70%) + MDPE (70% - 15%) + 15% optional colorant master batch]; 30 μm

**First adhesive layer; Thickness: 30 μm;**
[HDPE (0% - 50%) + LDPE (100% - 50%)]; 30 μm
**Heat sealable blocking layer; Thickness range: 50 - 150 μm ;**

First surface [HDPE (50% - 70%) + MDPE (50% - 15%) + 15% optional colorant master batch]
Layer 4 [HDPE or LLDPE based third adhesive layer]
Layer 5 [EVOH or third adhesive layer]
Layer 6 [EVOH] (core layer)
Layer 7 [EVOH or third adhesive layer]
Layer 8 [HDPE or LLDPE based third adhesive layer]
Second surface [HDPE (50% - 70%) + MDPE (50% - 15%) + 15% optional colorant master batch]

In further examples, lamitubes having thickness of 250 $\mu$m, 300 $\mu$m, and 350 $\mu$m were prepared with the layer wise distribution as depicted in Table 1. Similarly, other lamitubes with thickness 220 $\mu$m, and 390 $\mu$m were also prepared and included in testing for the mechanical properties.

| Lamitube layers | Layer wise distribution | 250 $\mu$m | 300 $\mu$m | 350 $\mu$m |
|---|---|---|---|---|
| **Top Layer** <br><br> Thickness ratio: 1:2:1 | Layer 1 [HDPE (30%) + MDPE (70%)] | 110 | 140 | 150 |
| | Layer 2 [HDPE (60%) + MDPE (30%) + 10% - White MB | | | |
| | Layer 3 [HDPE (30%) + MDPE (70%) | | | |
| **First adhesive layer** | LDPE - 100% | 20 | 20 | 20 |
| **Heat sealable blocking layer** | First surface [HDPE (30%) + MDPE (70%)] | 10 | 10 | 10 |
| | Third adhesive layer (MA-g-LLDPE) | 7.5 | 7.5 | 7.5 |
| | EVOH (core layer) | 15 | 15 | 15 |
| | Third adhesive layer (MA-g-LLDPE) | 7.5 | 7.5 | 7.5 |
| | Second surface [HDPE (30%) + MDPE (70%)] | 10 | 10 | 10 |
| **Second adhesive layer** | LDPE - 100% | 20 | 20 | 20 |
| **Sealant layer** <br><br> Thickness ratio: 1:2:1 | Layer 1 [HDPE (30%) + MDPE (70%)] | 50 | 70 | 110 |
| | Layer 2 [HDPE (70%) + MDPE (30%) | | | |
| | Layer 3 [HDPE (30%) + MDPE (70%) | | | |

**Structure of comparative example**

**Top layer (3-layer film); Thickness: 150 $\mu$m;**

Layer 1 [LLDPE (100%)]; 30 $\mu$m
Layer 2 [LDPE (70%) + LLDPE (15%) + MB (15%)]; 90 $\mu$m
Layer 3 [LLDPE (100%)]; 30 $\mu$m

**First adhesive layer; Thickness: 30 $\mu$m;**
[HDPE (0%) + LDPE (100%)]; 30 $\mu$m
**Heat sealable blocking layer; Thickness: 55 $\mu$m;**

Layer 1 [LLDPE (100%)]
Layer 2 [LLDPE based binding layer]
Layer 3 [EVOH]
Layer 4 [EVOH]
Layer 5 [EVOH or binding layer]
Layer 6 [LLDPE based binding layer]
Layer 7 [LLDPE (100%)

**Second adhesive layer; Thickness: 30 $\mu$m;**
[HDPE (0%) + LDPE (100%)]; 30 $\mu$m
**Sealant layer (3-layer film); Thickness: 85 $\mu$m;**

Layer 1 [LLDPE (100%)]; 17 $\mu$m
Layer 2 [LDPE (70%) + LLDPE (15%) + MB (15%)]; 51 $\mu$m
Layer 3 [LLDPE (100%)]; 17 $\mu$m.

**EXAMPLE 2**

**Resilience and stiffness tests: tube length -115 mm**

Mechanical properties of the lamitubes (as prepared in Example 1) having thickness 220 $\mu$m, 250 $\mu$m, 350 $\mu$m, and 390 $\mu$m were tested. Stiffness (mg) and young's modulus of the lamitubes was measured, the results for which are illustrated in Table 2. Comparative tests were conducted on a commercial lamitube having thickness 350 $\mu$m and the results are recorded in the Table 2 below. The stiffness test was conducted on the lamitubes by following the TAPPI T556 standard method. Young's modulus was measured by following ASTM D882. Similarly, resilience and bounce back tests were also conducted.

Table 2

| S.No. | Thickness | Stiffness (mg) | | Young's Modulus | |
|---|---|---|---|---|---|
| | ($\mu$m) | | | | |
| Lamitube | | MD | TD | MD | TD |
| 1 | **220** | 254 | 270 | 725 | 770 |
| 2 | **250** | 369 | 407 | 824 | 830 |
| 3 | **350** | 781 | 860 | 679 | 717 |
| 4 | **390** | 944 | 950 | 697 | 711 |
| Comparative Example | | | | | |
| 5 | **350** | 612 | 700 | 499 | 535 |

It can be observed with the data revealed in Table 1 that the stiffness of the lamitubes increased with increasing thickness from 220 $\mu$m - 390 $\mu$m. On the other hand, the young's modulus of the films did not show any particular trend. It is also clear from the Table 1 that the resin selection and orientation method are the primary variables that influence tensile values and thereby the stiffness of the lamitube. The value of young's modulus reflects the tensile modulus. Observing a higher modulus for the lamitube 3 having the same thickness as that of the comparative example indicated, that the lamitube was more stiffer and hence, had more resistance to elongation. Moreover, the present lamitubes despite the thickness being on the lower side, i.e., within the range of 220 - 390 $\mu$m, did not show any reduction in the stiffness of the film.

**EXAMPLE 3**

**Lamitube ovality**

To ensure that ovality of tubes does not exceed a certain limit, experiments were conducted by two methods, measurement method A and measurement method B. Vernier Calipers with least count of 0.01 were used.

In the mesurement method A, the outside diameter of the tube at the extremity of the shoulder was measured. On the same tube, the outside diameter of the open end of tube (maximum diameter at the open end circumference of the tube) was measured. Caution was taken to read value with the minimum contact between calipers and tube since this can lower the reading.

In the measurement method B, prefrabricated gauge method was used. In this method, ring gauges were made based on the below given formula for percentage out of roundness. Tubes were passed through these ring gauges of specific ovality. If a tube passes through 8% ovality ring gauges and doesn't pass through 6% ovality ring gauge, it implies that ovality of tube is more than 6% and less than 8%. Hence, using the above two methods, the ovality of the present lamitube was found to be in the range of 1 - 8%.

$$\% \text{ out of roundness} = \frac{\text{Dmax} - \text{Ds}}{\text{Ds}} \, X \, 100$$

where $D_{max}$ = Maximum diameter at open end of tube
Ds = Tube diameter at the shoulder

**EXAMPLE 4**

## Lamitube recyclability

Various parameters, such as, melt flow index, density, and screen pack pressure were calculated for the lamitube of the present disclosure. The test methods used for these experiments are listed in the Table 3 below.

One of the well-established recycle streams is blow moulded HDPE bottles. The properties of the recycled HDPE resin obtained from present lamitube can be compared with this established recycle stream to establish equivalence in performance.

For this study, the properties of a blend of 50% recycled HDPE lamitube based resin + 50% recycled HDPE blown bottle grade resin (test) was compared with 100% recycled HDPE blown bottle grade (control). Table 3 illustrates the results obtained for the 250 μm lamitube and Table 4 illustrates the results for 300 μm lamitube.

### Table 3

| Property | Critical value | Control | Test - 250 μm |
|---|---|---|---|
| Melt flow index (g/10min) | ASTM: D1238 0.2 to 0.7 g/10 minutes | 0.271 | 0.462 |
| Density (g/cm$^3$) | ASTM: D792 | 0.936 | 0.927 |
| | ± 0.010 from the control value | | |
| Screen pack pressure | < 10% pressure increase from control sample to test sample | N/A | 3.61% |
| % Volatiles in pellets | < 0.1% absolute difference from control sample to test sample | 0.0165 | 0.0312 |
| % Polypropylene in pellets | ASTM: D7399 <2% polypropylene to control and test samples. Not to exceed 4% polypropylene | <1% | <1% |
| Pellet colour L* | For natural HDPE** >63 | 81.35 | 91.95 |
| Pellet colour a* | For natural HDPE** >-4.5 | -1.20 | -0.76 |
| Pellet colour b* | For natural HDPE** < 13 | 2.74 | 4.34 |

### Table 4

| Property | Critical Value | Control | Test - 300 μm |
|---|---|---|---|
| Melt flow index (g/10min) | ASTM D1238: < 0.75 g/10 minutes delta to control | 0.338 | 0.544 |
| Density (g/cm$^3$) | ASTM D792: < 1 g/cc for control and test | 0.955 | 0.965 |
| Screen pack pressure delta | No guidance | N/A | -4.50% |
| Screen pack pressure build | End pressure no greater than 25% over starting pressure value | 5.80% | 3.30% |
| % Volatiles in pellets | < 0.5% | 0.0065 | 0.0084 |
| % Polypropylene in pellets | ASTM D7399: < 5% PP in test sample B (up to 10% allowable in innovation) | < 5% | < 5% |
| Differential scanning calorimeter (DSC) testing | ASTM D3418: Primary peak not to exceed 150°C | 130.7 | 129.17 |
| Pellet colour L* | For natural HDPE, > 63, All samples (guidance only required for homopolymers) | 81.51 | 93.55 |
| Pellet colour a* | For natural HDPE, > -4.5, All samples (guidance only required for homopolymers) | -0.9 | -0.88 |
| Pellet colour b* | For natural HDPE, < 13, All samples (guidance only required for homopolymers) | 4.15 | 4.38 |
| **Guidance required only for homopolymers | | | |

As can be seen from the Table 3 above, both the test lamitubes (250 μm and 300 μm) obtained from recycled material of the present lamitubes showed equivalent performance as per the standard recycled material. Hence, the present lamitubes can be recycled in code 2 (HDPE) stream as the values for all the parameters falls within the specification of the benchmark resin.

## Advantages of the present disclosure:

The lamitube composition as disclosed in the present disclosure has a high density in the range of 0.942 - 0.99 gm/cm$^3$, which allows easy recyclability in the HDPE recycling stream. The present lamitubes also overcomes the problem of achieving desired ovality by offering lamitubes having low ovality in the range of 1 - 8%. The stiffness of the lamitubes of the present disclosure with thickness in the range of 170 μm - 400 μm is higher almost by 15 - 30% as compared to the commercial lamitubes of the same thickness, thereby enabling source i.e., the lamitube thickness is reduced without affecting the essential functionalities such as, stability, stiffness, and elongation in use.

| Differential scanning calorimeter (DSC) testing | ASTM D3418: Primary peak not to exceed 150°C | 130.7 | 129.17 |
|---|---|---|---|
| Pellet colour L* | For natural HDPE, > 63, All samples (guidance only required for homopolymers) | 81.51 | 93.55 |
| Pellet colour a* | For natural HDPE, > -4.5, All samples (guidance only required for homopolymers) | -0.9 | -0.88 |
| Pellet colour b* | For natural HDPE, < 13, All samples (guidance only required for homopolymers) | 4.15 | 4.38 |
| **Guidance required only for homopolymers | | | |

As can be seen from the Table 3 above, both the test lamitubes (250 μm and 300 μm) obtained from recycled material of the present lamitubes showed equivalent performance as per the standard recycled material. Hence, the present lamitubes can be recycled in code 2 (HDPE) stream as the values for all the parameters falls within the specification of the benchmark resin.

## Advantages of the present disclosure:

The lamitube composition as disclosed in the present disclosure has a high density in the range of 0.942 - 0.99 gm/cm$^3$, which allows easy recyclability in the HDPE recycling stream. The present lamitubes also overcomes the problem of achieving desired ovality by offering lamitubes having low ovality in the range of 1 - 8%. The stiffness of the lamitubes of the present disclosure with thickness in the range of 170 μm - 400 μm is higher almost by 15 - 30% as compared to the commercial lamitubes of the same thickness, thereby enabling source i.e., the lamitube thickness is reduced without affecting the essential functionalities such as, stability, stiffness, and elongation in use.

## Claims

1. A lamitube comprising:

(a) a top layer comprising a resin composition comprising a combination of high-density polyethylene (HDPE) and medium density polyethylene (MDPE) having a melt flow index in the range of 0.5 - 1.2 g/10 minutes and a density in the range of 0.942 - 0.990 gm/cm$^3$; and
(b) a second layer comprising a combination of high-density polyethylene (HDPE) and medium density polyethylene (MDPE), having a first surface and a second surface, whereby the meaning of the first and second surface of the second layer is given in the description,

wherein the second layer is a heat sealable blocking layer comprising 3-11 layers and having a thickness in the range of 50 μm - 150 μm,
comprising EVOH having a weight percentage in the range of 1 - 10% with respect to the lamitube;
wherein the heat sealable blocking layer comprises a core layer, an outer layer, an inner layer, and at least one third adhesive layer;

(c) at least one first adhesive layer present between the top layer and the first surface of second layer;

(d) a third layer, wherein the third layer is a sealant layer comprising a resin composition comprising a combination of high-density polyethylene (HDPE) and medium density polyethylene (MDPE) having a melt flow index in the range of 0.5 - 1.2 g/10 minutes and a density in the range of 0.942 - 0.990 gm/cm$^3$; and

(e) at least one second adhesive layer present between the third layer and the second surface of the second layer;

wherein the lamitube has a density in the range of 0.942 - 0.990 gm/cm$^3$, has a tube ovality in the range of 1-8% measured using prefrabricated gauge method, and a thickness in the range of 170-400 $\mu$m.

2. The lamitube as claimed in claim 1, wherein the top layer comprises 1-3 layer and has a thickness in the range of 50 $\mu$m - 150 $\mu$m.

3. The lamitube as claimed in claim 1, wherein the heat sealable blocking layer has a thickness in the range of 50 $\mu$m -150 $\mu$m.

4. The lamitube as claimed in claim 1, wherein the sealant layer comprises 1-3 layers and has a thickness in the range of 50 $\mu$m - 180 $\mu$m.

5. The lamitube as claimed in claim 1, wherein the core layer, the outer layer, the inner layer, and the at least one third adhesive layer independently is a multilayer structure.

6. The lamitube as claimed in claim 1, wherein the at least one first adhesive layer, the at least one second adhesive layer, and the at least one third adhesive layer independently has a thickness in the range of 20 $\mu$m - 40 $\mu$m and the at least one first adhesive layer, the at least one second adhesive layer, and the at least one third adhesive layer comprises ethylene polymer having a density in the range of 0.930 - 0.962 gm/cm$^3$.

7. The lamitube as claimed in claim 1, wherein the resin composition comprises a colorant master batch having a weight percentage in the range of 0 - 10% with respect to the resin composition.

8. The lamitube as claimed in any one of the claims 1-7, wherein the lamitube has a stiffness in the range of 200 - 1300 mg measured by TAPPI T556 standard method, a young's modulus in the range of 600 - 1000 MPa measured by ASTM D882 method and has a thickness in the range of 170 $\mu$m - 400 $\mu$m.

9. A process of manufacturing the lamitube as claimed in any one of the claims 1-8, said process comprises the steps of forming the layers and laminating the layers together, then slitting into reels of desired width in the range of 63 - 320 mm, followed by tubing from the reels.

**Patentansprüche**

1. Laminatrohr umfassend:

(a) eine Deckschicht, die eine Harzzusammensetzung umfasst, die eine Kombination aus Polyethylen hoher Dichte (HDPE) und Polyethylen mittlerer Dichte (MDPE) umfasst, die einen Schmelzflussindex im Bereich von 0,5 - 1,2 g/10 Minuten und eine Dichte im Bereich von 0,942 - 0,990 gm/cm$^3$ aufweist; und

(b) eine zweite Schicht, die eine Kombination aus Polyethylen hoher Dichte (HDPE) und Polyethylen mittlerer Dichte (MDPE) umfasst, die eine erste Oberfläche und eine zweite Oberfläche aufweist, wobei die Bedeutung der ersten und zweiten Oberfläche der zweiten Schicht in der Beschreibung genannt wird, wobei die zweite Schicht eine wärmeversiegelbare Sperrschicht ist, die 3-11 Schichten umfasst und eine Dicke im Bereich von 50 $\mu$m - 150 $\mu$m aufweist,

umfassend EVOH mit einem Gewichtsanteil im Bereich von 1 - 10 % in Bezug auf das Laminatrohr; wobei die wärmeversiegelbare Sperrschicht eine Kernschicht, eine äußere Schicht, eine innere Schicht und mindestens eine dritte Klebstoffschicht umfasst;

(c) mindestens eine erste Klebstoffschicht zwischen der oberen Schicht und der ersten Oberfläche der zweiten Schicht;

(d) eine dritte Schicht, wobei die dritte Schicht eine Dichtungsschicht ist, die eine Harzzusammensetzung umfasst, die eine Kombination aus Polyethylen hoher Dichte (HDPE) und Polyethylen mittlerer Dichte (MDPE) umfasst, die einen Schmelzflussindex im Bereich von 0,5 - 1,2 g/10 Minuten und eine Dichte im Bereich von 0,942 - 0,990 g/cm$^3$ aufweist; und

(e) mindestens eine zweite Klebstoffschicht zwischen der dritten Schicht und der zweiten Oberfläche der zweiten Schicht;

wobei das Laminatrohr eine Dichte im Bereich von 0,942 - 0,990 gm/cm$^3$, eine mit einem vorgefertigten Lehrenverfahren gemessene Rohrovalität im Bereich von 1-8 % und eine Dicke im Bereich von 170-400 $\mu$m aufweist.

2. Laminatrohr nach Anspruch 1, wobei die Deckschicht 1-3 Schichten umfasst und eine Dicke im Bereich von 50 $\mu$m - 150 $\mu$m aufweist.

3. Laminatrohr nach Anspruch 1, wobei die wärmeversiegelbare Sperrschicht eine Dicke im Bereich von 50 $\mu$m - 150 $\mu$m aufweist.

4. Laminatrohr nach Anspruch 1, wobei die Dichtungsschicht 1-3 Schichten umfasst und eine Dicke im Bereich von 50 $\mu$m - 180 $\mu$m aufweist.

5. Laminatrohr nach Anspruch 1, wobei die Kernschicht, die äußere Schicht, die innere Schicht und die mindestens eine dritte Klebstoffschicht unabhängig voneinander eine mehrschichtige Struktur ist.

6. Laminatrohr nach Anspruch 1, wobei die mindestens eine erste Klebstoffschicht, die mindestens eine zweite Klebstoffschicht und die mindestens eine dritte Klebstoffschicht unabhängig voneinander eine Dicke im Bereich von 20 $\mu$m - 40 $\mu$m und die mindestens eine erste Klebstoffschicht, die mindestens eine zweite Klebstoffschicht und die mindestens eine dritte Klebstoffschicht Ethylenpolymer mit einer Dichte im Bereich von 0,930 - 0,962 gm/cm$^3$ aufweist.

7. Laminatrohr nach Anspruch 1, wobei die Harzzusammensetzung eine Farbstoff-Mastercharge umfasst, die einen Gewichtsprozentsatz im Bereich von 0 - 10 % in Bezug auf die Harzzusammensetzung aufweist.

8. Laminatrohr nach einem der Ansprüche 1 bis 7, wobei das Laminatrohr nach dem TAPPI T556-Standardverfahren gemessen eine Steifigkeit im Bereich von 200 - 1300 mg, nach dem ASTM D882-Verfahren gemessen ein Elastizitätsmodul im Bereich von 600 - 1000 Mpa und eine Dicke im Bereich von 170 $\mu$m - 400 $\mu$m aufweist.

9. Verfahren zur Herstellung des Laminatrohrs nach einem der Ansprüche 1 bis 8, wobei das Verfahren die Schritte des Formens der Schichten und des Zusammenlaminierens der Schichten umfasst, gefolgt vom Schneiden in Rollen der gewünschten Breite im Bereich von 63 bis 320 mm, gefolgt von der Rohrformung aus den Rollen.

**Revendications**

1. Un lamitube comprenant :

(a) une couche supérieure comprenant une composition de résine comprenant une combinaison de polyéthylène haute densité (HDPE) et de polyéthylène moyenne densité (MDPE) ayant un indice de fluidité à chaud compris entre 0,5 et 1,2 g/10 minutes et une densité comprise entre 0,942 et 0,990 gm/cm$^3$; et
(b) une deuxième couche comprenant une combinaison de polyéthylène haute densité (HDPE) et de polyéthylène moyenne densité (MDPE), ayant une première surface et une deuxième surface, la signification de la première et de la deuxième surface de la deuxième couche étant donnée dans la description,

dans laquelle la deuxième couche est une couche de blocage thermoscellable comprenant 3 à 11 couches et ayant une épaisseur comprise entre 50 $\mu$m et 150 $\mu$m, comprenant EVOH ayant un pourcentage en poids compris entre 1 et 10 % par rapport au lamitube ;
dans lequel la couche de blocage thermoscellable comprend une couche centrale, une couche externe, une couche interne et au moins une troisième couche adhésive ;

(c) au moins une première couche adhésive présente entre la couche supérieure et la première surface de la deuxième couche ;

(d) une troisième couche, dans laquelle la troisième couche est une couche de scellage comprenant une composition de résine comprenant une combinaison de polyéthylène haute densité (HDPE) et de polyéthylène moyenne densité (MDPE) ayant un indice de fluidité à chaud compris entre 0,5 et 1,2 g/10 minutes et une densité comprise entre 0,942 et 0,990 gm/cm$^3$; et

(e) au moins une deuxième couche adhésive présente entre la troisième couche et la deuxième surface de la deuxième couche ;

dans lequel le lamitube a une densité comprise entre 0,942 et 0,990 gm/cm$^3$, présente une ovalité de tube comprise entre 1 et 8 %, mesurée à l'aide d'une méthode de jauge préfrabriquée, et une épaisseur comprise entre 170 et 400 μm .

2. Le lamitube selon la revendication 1, dans lequel la couche supérieure comprend 1-3 couches et a une épaisseur comprise entre 50 μm et 150 μm.

3. Le lamitube selon la revendication 1, dans lequel la couche de blocage thermoscellable a une épaisseur comprise entre 50 μm et 150 μm.

4. Le lamitube selon la revendication 1, dans lequel la couche de scellage comprend 1 à 3 couches et a une épaisseur comprise entre 50 μm et 180 μm.

5. Le lamitube selon la revendication 1, dans lequel la couche centrale, la couche externe, la couche interne et la ou les troisième(s) couche(s) adhesive(s) sont indépendamment une structure multicouche.

6. Le lamitube selon la revendication 1, dans lequel au moins une première couche adhésive, au moins une deuxième couche adhésive et au moins une troisième couche adhésive ont indépendamment une épaisseur comprise entre 20 μm et 40 μm et la ou les première(s) couche(s) adhesive(s), la ou les deuxième(s) couche(s) adhesive(s) et la ou les troisième(s) couche(s) adhesive(s) comprennent un polymère d'éthylène ayant une densité comprise entre 0,930 et 0,962 gm/cm$^3$.

7. Le lamitube selon la revendication 1, dans lequel la composition de résine comprend un mélange maître colorant ayant un pourcentage en poids compris entre 0 et 10 % par rapport à la composition de résine.

8. Le lamitube selon l'une quelconque des revendications 1 à 7, dans lequel le lamitube a une rigidité comprise entre 200 et 1300 mg mesurée par la méthode standard TAPPI T556, un module de Young compris entre 600 et 1000 MPa mesuré par la méthode ASTM D882 et une épaisseur comprise entre 170 μm et 400 μm.

9. Procédé de fabrication du lamitube selon l'une quelconque des revendications 1 à 8, ledit procédé comprenant les étapes de formation des couches et de laminage des couches ensemble, puis de découpe en bobines de la largeur souhaitée dans la plage de 63 à 320 mm, suivies de la fabrication des tubes à partir des bobines.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013057737 A
- WO 2013051007 A
- WO 2019172932 A
- WO 2018202479 A
- JP 2004249474 A
- WO 2006133692 A
- US 2016339663 A
- US 20060188678 A
- US 3931449 A
- WO 2018042299 A
- WO 2008135755 A
- US 2019299574 A